# EUROPEAN PATENT APPLICATION

(11) **EP 1 158 520 A2**
(43) Date of publication of application: **28.11.2001**
(21) Application number: 01102683.8
(22) Date of filing: 07.02.2001
(51) Int. Cl.: G11B 21/02, G11B 15/18

(54) **Positioning actuator with lower inductance voice coil motor**

(30) Priority: 25.05.2000 US 578969
(71) Applicant: Hewlett-Packard Company, A Delaware Corporation, Palo Alto, CA 94304 (US)
(72) Inventor: Anderson, James C., Eagle, ID 83616 (US)
(74) Representative: Schoppe, Fritz, Dipl.-Ing.

(57) **Abstract**

A positioning actuator that includes a linear actuator driven by a voice coil motor (30). The center core (46) of the voice coil motor (30) is covered with a highly conductive material (68) that provides a shorted turn to lower the inductance of the motor (30). The actuator includes an annular coil (32) of electrically conductive windings, a magnet (34) surrounding at least a part of the coil (32), a metal post (46) extending axially through the inside of the coil (32), a guide rail (26 or 28) extending axially through the inside of the coil (32) along the post (46), and a carriage (24) moveably coupled to the guide rail (26 or 28) for travel thereon. At least part of the post (46) is covered with highly electrically conductive material (68) such as copper, silver or gold.

## Description

### FIELD OF THE INVENTION

The present invention relates generally to tape drive and other head positioning actuators and, more particularly, to a head positioning actuator using a lower inductance voice coil motor.

### BACKGROUND OF THE INVENTION

Information is recorded on and read from a moving magnetic tape with a magnetic read/write head positioned next to the tape. The magnetic "head" may be a single head or, as is common, a series of read/write head elements stacked individually and/or in pairs within the head unit. Data is recorded in tracks on the tape by moving the tape lengthwise past the head. The head elements are selectively activated by electric currents representing the information to be recorded on the tape. The information is read from the tape by moving the tape longitudinally past the head elements so that magnetic flux patterns on the tape create electric signals in the head elements. These signals represent the information stored on the tape.

Data is recorded on and read from each of the parallel tracks on the tape by positioning the head elements at different locations across the tape. That is, head elements are moved from track to track as necessary to either record or read the desired information. Movement of the magnetic head is controlled by an actuator operatively coupled to some type of servo control circuitry. Tape drive head positioning actuators often include a lead screw driven by a stepper motor, a voice coil motor, or a combination of both. The carriage that supports the head is driven by the actuator along a path perpendicular to the direction that the tape travels. The head elements are positioned as close to the center of a track as possible based upon the servo information recorded on the tape.

Hewlett Packard Company has developed a new servo controlled head positioning actuator designed to move the head rapidly to keep the read/write elements correctly positioned on the tape tracks even as the tape wanders back and forth within the tape guiding system. This head positioning actuator, which is described in detail below, uses a linear actuator driven by a voice coil motor. One factor that may limit the actuator's ability to move the head rapidly to keep the head elements positioned correctly over the tape tracks is the delivery of current to the coil in the voice coil motor. Lowering the inductance of the coil allows current to flow more quickly into the coil which, in turn, allows the voice coil motor to drive the actuator and move the head as rapidly as possible to the correct position.

A copper tube around the center core of the voice coil motor in disc drive actuators is sometimes used as a shorted turn to lower the inductance of the motor and thereby reduce the time it takes to move the head to the correct position over the disc. This type of shorted turn is very difficult to implement in Hewlett Packard's new tape drive head positioning actuator because the primary guide rail in this new design is usually solidly attached to and extends along the center core of the voice coil motor. Hence, it is difficult to add a conductive tube around the center core of the voice coil motor.

### SUMMARY OF THE INVENTION

Accordingly, the present invention is directed to a positioning actuator that includes a linear actuator driven by a voice coil motor. The center core of the voice coil motor is covered with a highly conductive material that provides a shorted turn to lower the inductance of the motor. The actuator of the present invention includes an annular coil of electrically conductive windings, a magnet surrounding at least a part of the coil, a metal post extending axially through the inside of the coil, a guide rail extending axially through the inside of the coil along the post, and a carriage moveably coupled to the guide rail for travel thereon. At least part of the post is covered with highly electrically conductive material such as copper, silver or gold.

### DESCRIPTION OF THE DRAWINGS

Fig. 1 is a top down plan view of a tape drive incorporating a head positioning actuator constructed according to one embodiment of the present invention.
Fig. 2 is a perspective view of the moveable carriage and head positioning actuator of Fig. 1.
Figs. 3A and 3B are side elevation and partial section views of the moveable carriage and head positioning actuator of Figs. 1 and 2 in different positions along the guide rails.
Fig. 4 is a top down plan and partial section view of the moveable carriage and head positioning actuator taken along the line 4-4 in Fig. 3A.
Fig. 5 is a front elevation and partial cut-away view of the moveable carriage and head positioning actuator as viewed along the line 5-5 in Fig. 4.
Figs. 6A, 6B and 6C are detail perspective views of the head carriage. Fig. 6A illustrates the carriage without the coil. Fig. 6B illustrates the carriage with the coil installed in the carriage. Fig. 6C illustrates a carriage in which a non-conductive break is made between the center portions of the carriage and the back portion of the carriage.
Fig. 7 is a detail side elevation view of the back portion of the carriage showing one type of bearing preload mechanism.
Fig. 8 is a representational side view of the actuator showing the magnetic flux in the voice coil motor.
Figs. 9 and 10 are detail perspective views of the center core of the voice coil motor showing the conductive covering on the core.

### DETAILED DESCRIPTION OF THE INVENTION

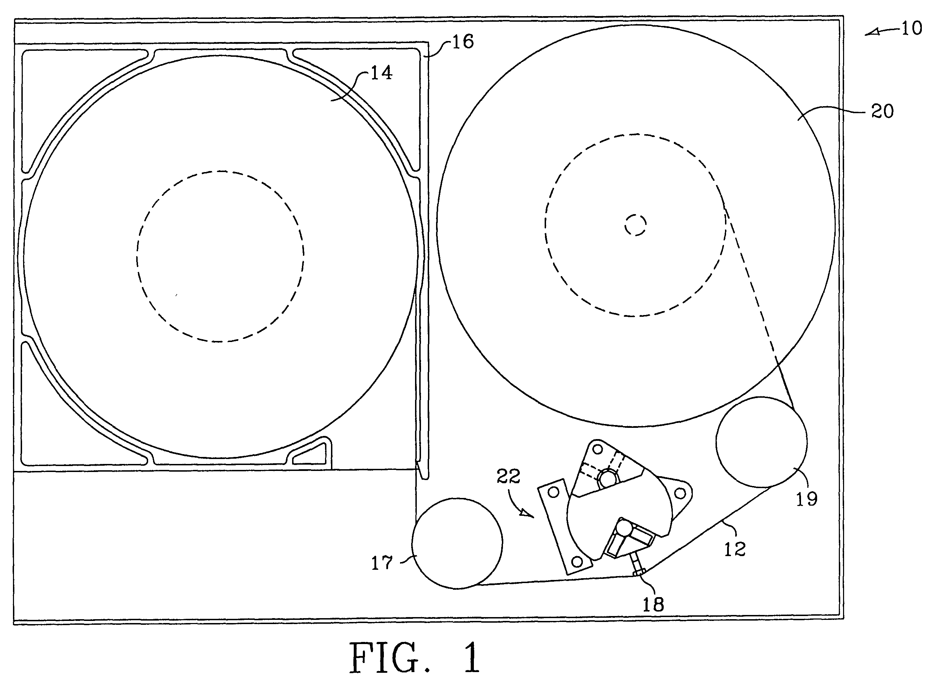

Referring first to Fig.1, a magnetic tape 12 is wound on a single supply spool 14 and tape cartridge 16. Tape cartridge 16 is inserted into tape drive 10 for read and write operations. Tape 12 passes around tape guide 17, over a magnetic read/write head 18, around tape guide 19 to take up spool 20. Head 18 is mounted to a head carriage and actuator assembly 22 that includes a variety of operational features related to head 18. Head carriage and actuator assembly 22 is also referred to for convenience as actuator 22. Magnetic head 18 engages tape 12 as tape 12 moves across the face of head 18 to record data on tape 12 and to read data from tape 12.

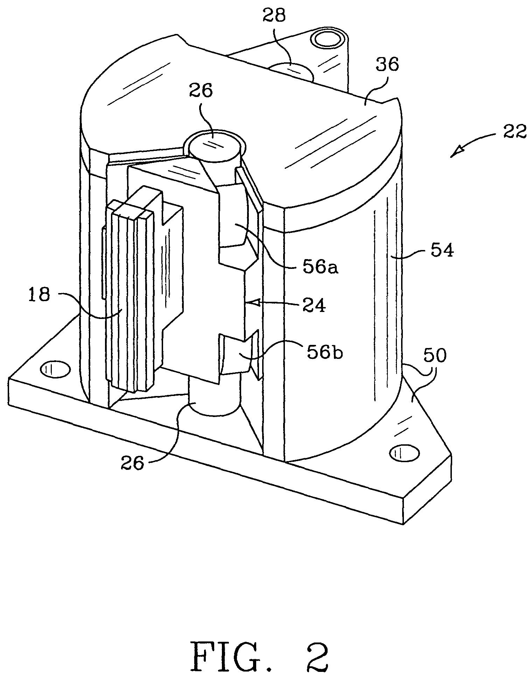

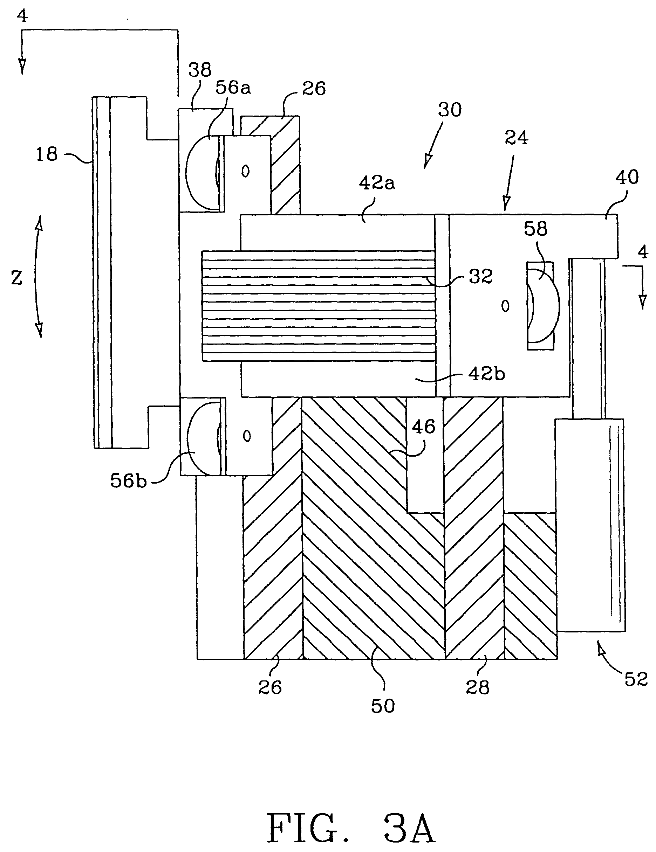

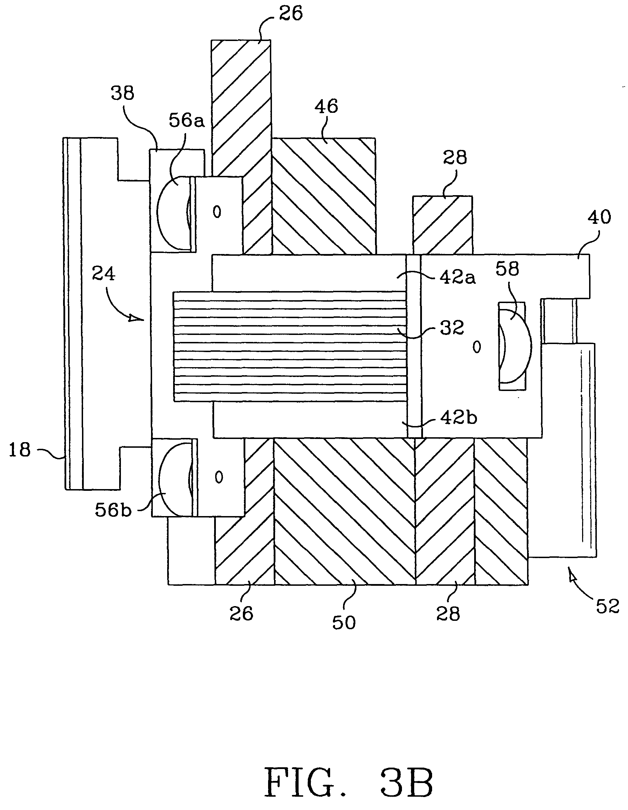

Fig. 2 is a perspective view of the actuator 22. Figs. 3, 4 and 5 are elevation and plan views of actuator 22. The operative components of actuator 22 are best seen in Figs. 3-5. Referring to Figs. 2-5, head 18 is carried by a moveable carriage 24. Carriage 24 moves up and down along a primary guide rail 26 and a secondary guide rail 28 at the urging of voice coil motor 30. Head 18, which is carried by carriage 24, therefore, also moves up and down in a direction perpendicular to the direction of tape travel as desired to properly position head 18 for reading and writing operations. Figs. 3A and 3B show carriage 24 and head 18 in different positions along the guide rails.

Voice coil motor 30 includes a coil 32 and magnets 34. Magnets 34 are attached to the inside of sidewalls 54 of actuator base 50. Top flux plate 36 fits on top of sidewalls 54 of base 50. Actuator base 50 is secured to the frame or another stable component of tape drive 10. Coil 32 is mounted to carriage 24.

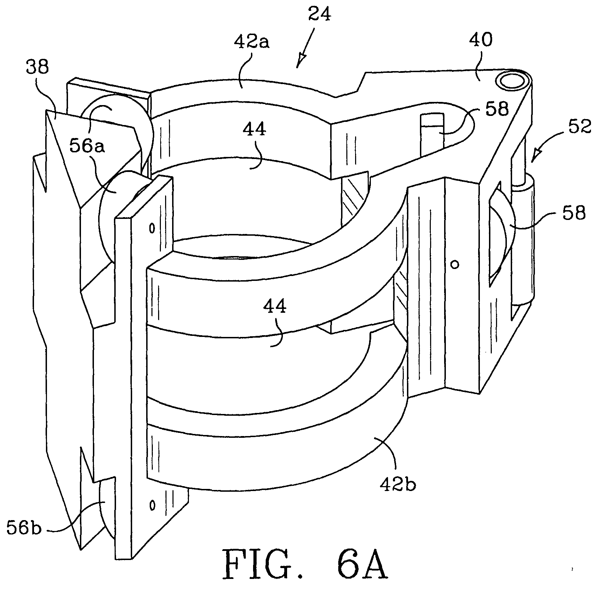

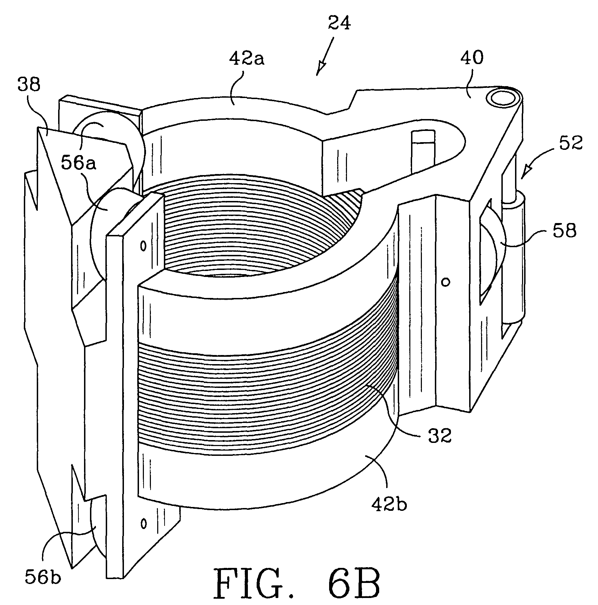

The details of carriage 24 are best seen in Figs. 6A and 6B. Fig. 6A is a perspective view of carriage 24 without coil 32. Fig. 6B is a perspective view of carriage 24 with coil 32 installed. Referring to Figs. 6A and 6B, carriage 24 includes a front portion 38, a back portion 40 and truncated ring shaped center portions 42A and 42B that join the front and back portions 38, 40. Center portions 42A and 42B are positioned inside a circumferential perimeter defined by magnets 34. The ring shaped center portions 42A and 42B are spaced apart a distance equal to or slightly greater than the height (the axial dimension) of coil 32. Coil 32 is sandwiched between and firmly attached to ring shaped center portions 42B and 42C in carriage 24. Coil 32 is exposed at cavities 44 formed on each side of carriage 24 between ring shaped center portions 42A and 42B.

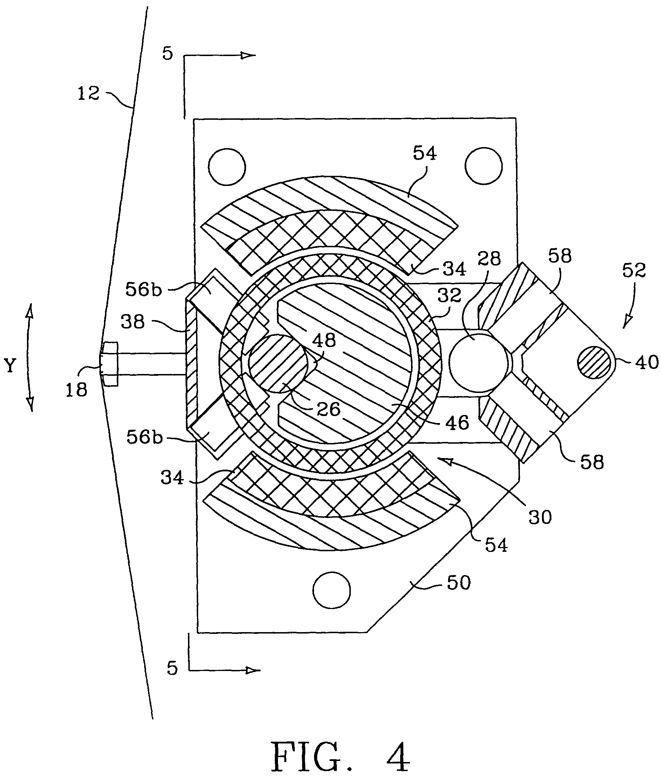

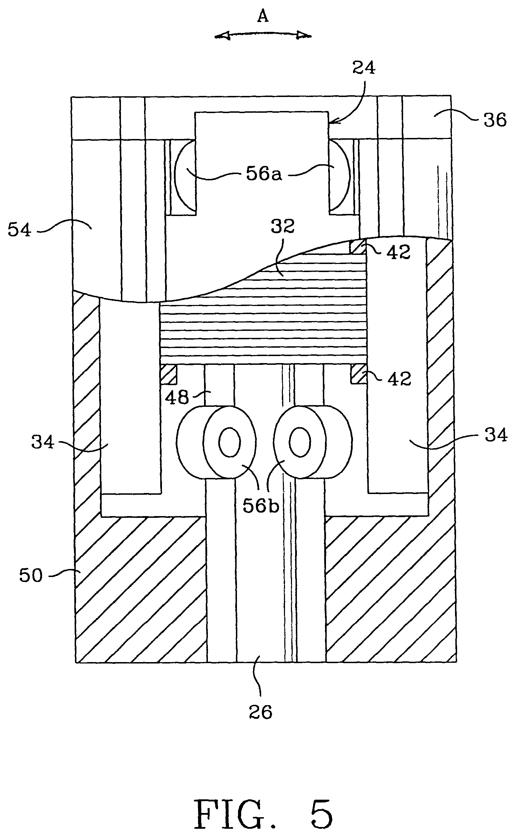

Referring again to Figs. 2-5, a post 46 extends vertically through the center portion of coil 32. In the embodiment of the invention shown in the drawings, post 46 is the upright core portion of actuator base 50. Primary guide rail 26 extends up along a V-shaped trough 48 formed in the front side of core 42. Secondary guide rail 28 is positioned at the back of carriage 24 just outside coil 32. Head 18 is mounted to front piece 38 of carriage 24. If necessary or desirable, a position sensor 52 that reads the vertical position of carriage 24 may be mounted between back piece 40 and actuator base 50. Carriage 24 travels along primary guide rail 26 on two pairs of bearings 56A and 56B mounted in the front piece 38 of carriage 24. Carriage 24 travels along secondary guide rail 28 on one pair of bearings 58 mounted in the back piece 40 of carriage 24. Preferably, bearings 56A are mounted at the top of carriage 24, bearings 56B are mounted at the bottom 62 of carriage 24, and bearings 58 are mounted at the middle of carriage 24. In this configuration, bearings 56A and 56B control the position of carriage 24 in the azimuth direction, indicated by arrow A in Fig. 5, and the zenith direction, indicated by arrow Z in Fig. 3A. Bearings 58 control the position of carriage 24 in the yaw direction, indicated by arrow Y in Fig. 4.

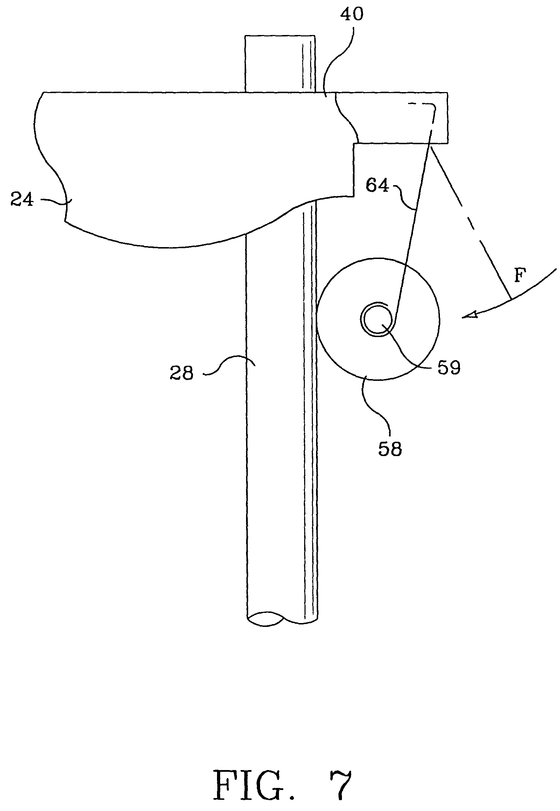

It may be desirable to preload one or both bearings 58 against secondary rail 28 to maintain contact of all of the bearings against the rails. One type of bearing preload mechanism is shown in Fig. 7. Referring to Fig. 7, one or both of the secondary rail bearings 58 are spring loaded against secondary guide rail 28. A spring 64, which supports bearing 58, extends between back portion 40 of carriage 24 and bearing shaft 59. Spring 64 generates a spring force F that pushes bearing 58 against secondary guide rail 28 and pulls carriage 24 rearward. The rearward pull of carriage 24 urges the primary guide rail bearings 56 against primary guide 26.

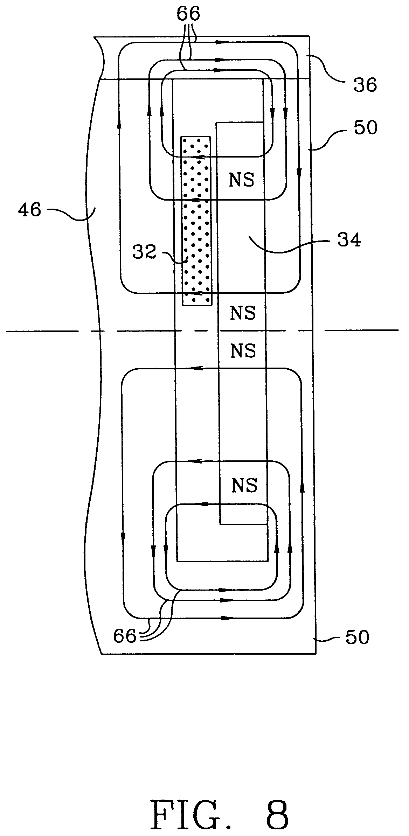

In operation, actuator 22 positions head 18 relative to tape 12 according to positional information recorded on tape 12. It may be desirable, and in some cases necessary, to make one or all of top flux plate 36, post 46 and actuator base 50 from a soft magnetic steel to carry the magnetic flux 66 generated by magnets 34 through the space occupied by coil 32, as shown in Fig. 8. A servo control signal is generated from the positional information on tape 12 through servo control circuitry (not shown) and delivered as an electrical current to voice coil 32. The presence of current in coil 32 in the magnetic field generated by magnets 34 creates a vertical force on coil 32 and, correspondingly, on carriage 24. This vertical force moves carriage 24 and head 18 up or down as necessary to properly position head 18 relative to tape 12.

The position of primary guide rail 26 inside coil 32 and the position of bearings 56A and 56B above and below coil 32 minimizes the amount of mass needed at the back of carriage 24 to place the center of gravity of carriage 24 at the same location as the center of force exerted by voice coil motor 30. Positioning the center of gravity of carriage 24 at the same location as the center of force of voice coil motor 30 reduces the amplitude of the carriage rocking modes. So, by locating primary guide rail 26 inside coil 32, the overall mass of carriage 24 can be reduced. A more compact design can also be achieved by positioning coil 32 between primary guide rail bearings 56A and 56B. This configuration allows the positioning of head 18 closer to the center of force of voice coil motor 30 to further reduce the size and mass of carriage 24.

It is desirable to glue or otherwise fasten primary guide rail 26 to post 46 to increase the stiffness of primary guide rail 26. In addition, fastening primary guide rail 26 to post 46 eliminates the need to provide other support for primary guide rail 26, particularly at the ends of the primary guide rail. The added stiffness allows higher resonant frequencies of the rocking modes of carriage 24 and, hence, a higher band width for the servo control system. It is also desirable to separate upper guide bearings 56A from lower guide bearings 56B as much as possible without exceeding the vertical height limitations of actuator 22 and tape drive 10. Since the lowest stiffness member in determining the carriage rocking frequencies is the bearings, spreading the bearings as far apart as possible increases the effective stiffness of the carriage guide system. So, by maximizing the spacing between bearings 56A and 56B, the resonant frequency of the carriage rocking modes can be made as high as possible for a given stiffness of bearings.

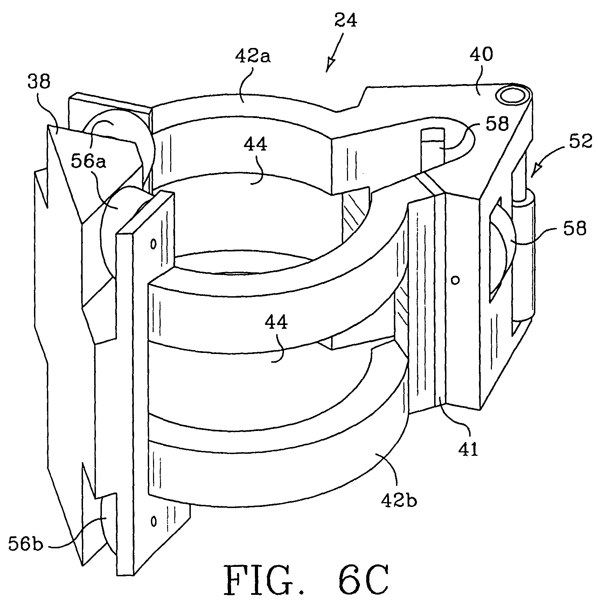

If carriage 24, or at least one of the center portions 42A and 42B, are made of conductive material, then the carriage will form an electrically conductive loop in the magnetic flux of voice coil motor 30. The movement of carriage 24 as it is driven by motor 30, therefore, will generate an electrical current through this conductive loop. The current in carriage 24 generates a damping force that acts on carriage 24 in a direction opposite the direction of travel and is proportional to the velocity of the carriage. This damping force can be avoided by making carriage 24, or at least the center portions 42A and 42B, from a non-conductive material or by forming a non-conductive break in the otherwise conductive carriage loop. Fig. 6C shows such a non-conductive break in carriage 24. Referring to Fig. 6C, a strip 41 of adhesive material fills a break made in carriage 24 near one of the junctions of back portions 40 and center portions 42A and 42B. Although any electrically non-conductive material may be used, an epoxy or other strong adhesive is preferred to help maintain the structural integrity of carriage 24.

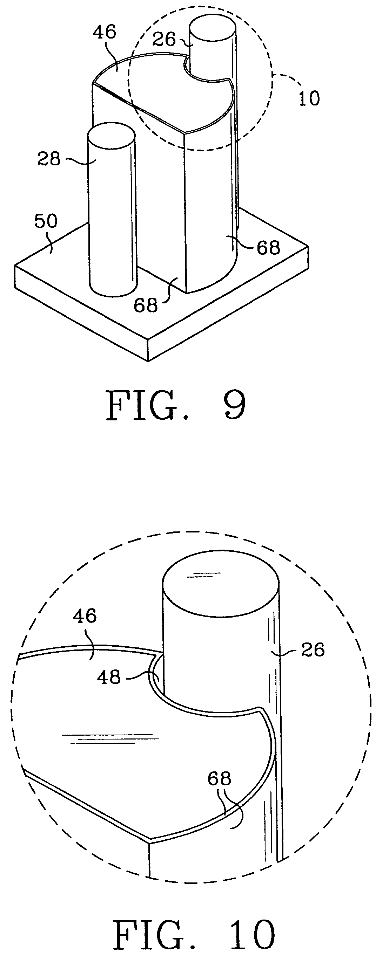

Referring to Fig. 9, which is perspective view of the interior of actuator 22, post 46 that forms the center core of actuator 22 is covered with a material that is highly electrically conductive. This conductive covering is designated by reference number 68. "Highly" electrically conductive in this context means more conductive than the material forming post/core 46. Copper, silver, gold and similarly conductive materials are the most desirable. Conductive covering 68 on center core 46 provides a low resistance path, commonly called a shorted turn, through which electrical currents induced in the core can flow more rapidly. The shorted turn lowers the inductance of the actuator's voice coil motor 30. Lowering the inductance of motor 30 allows more current to flow more quickly into coil 32 for a set voltage to produce faster acceleration of head carriage 24 and correspondingly, faster positioning of head 18.

One way to form covering 68 is to plate the conductive material on to center core 46. Primary guide rail 26 can then be fastened to core 46 as described above. Although the thickness of covering 68 will vary depending on the type of covering material, the electrical and magnetic characteristics of core 46 and the other components of actuator 22, as well as the inductance desired for coil 32, it is expected that copper, silver or gold coverings up to about 0.4mm thick will provide a desirable level of inductance reduction in voice coil motor driven actuators such as the one shown in the Figures. It has been observed that a silver plated covering 68 0.3mm thick reduces the inductance of coil 32 by 50%. With silver plating, the inductance of coil 32 drops sharply as a very thin (less than 0.05mm) covering is applied with the reduction curve tailing off to become nearly flat once the thickness of covering 68 reaches 0.4 to 0.5mm. While it is expected that covering 68 will be formed to a uniform thickness over substantially all of core 46, varying degrees of coverage are possible alone or in combination with varying the thickness of covering 68 as necessary or desirable to achieve the required shorted turn.

"Bearings" as used herein means any suitable object, structure or surface that moveably supports the carriage for travel along the rails. Suitable bearings may include, for example, ball bearings, roller bearings, Gothic arch bearings, journal bearings, bushings and the like.

Although the invention has been shown and described with reference to a head carriage and actuator assembly for a tape drive, the invention may be embodied in other carriage and actuator assemblies, structures and designs. For example, the invention could be incorporated in many different types of servo positioned actuators that use a voice coil motor. The voice coil motor might be configured so that the magnets are secured to the head carriage and the coil remains stationary. And, the coil need not be annular. A square or rectangular coil may be appropriate in some applications. The post and the primary guide rail could be formed as an integral unit, rather the discrete components described above. The sidewalls of the actuator base might be formed integral to the base foundation, as shown in Figs. 2, 5 and 6, or the sidewalls might be formed integral with the top plate and separate from the base. Therefore, it is to be understood that these and other variations of and modifications to the embodiments shown and described may be made without departing from the spirit and scope of the invention as defined in following claims.

## Claims

1. A carriage and actuator assembly, comprising:
an annular coil (32) of electrically conductive windings;
a magnet (34) surrounding at least a part of the coil (32);
a metal post (46) extending axially through the inside of the coil (32); highly electrically conductive material (68) covering at least part of the post (46);
a guide rail (26 or 28) extending axially through the inside of the coil (32) along the post (46); and
a carriage (24) moveably coupled to the guide rail (26 or 28) for travel thereon.

2. The assembly according to Claim 1, wherein the covering material (68) is formed to a uniform thickness over substantially all of the post (46).

3. The assembly according to Claim 1, wherein the covering material (68) is plated on to the post (46).

4. The assembly according to Claim 1, wherein the metal post (46) is made from a magnetic metal and the covering material (68) is made from copper, silver or gold.

5. A carriage and actuator assembly, comprising:
an annular coil (32) of electrically conductive windings;
a magnet (34) surrounding at least a part of the coil (32);
a metal post (46) extending axially through the inside of the coil (32); highly electrically conductive material (68) covering at least part of the post (46);
a first guide rail (26) secured to the post (46) and extending axially through the inside of the coil (32) along the post (46);
a second guide rail (28) disposed outside the coil (32) radially opposite and parallel to the first guide rail (26); and
a carriage (24) moveably coupled to the guide rails (26 and 28) for travel thereon.

6. The assembly according to Claim 4, further comprising first, second and third bearings (56A, 56B and 58) mounted to the carriage (24), the first and second bearings (56A and 56B) engaging the first guide rail (26) at locations spaced apart axially from one another and the third bearings (58) engaging the second guide rail (28) at an axial location between the first and second bearings (56A and 56B).

7. A carriage and actuator assembly, comprising:
a motor (30) comprising a coil (32) of electrically conductive windings and a magnet (34) adjacent to the coil (32);
a metal post (46) extending axially through the inside of the coil (32); highly electrically conductive material (68) covering at least part of the post (46);
a guide rail (26 or 28) extending axially through the inside of the coil (32) along the post (46);
a carriage (24) operatively coupled to the motor, at least part of the carriage (24) disposed within a central portion of the motor (30) and the carriage (24) moveable along the guide rail (26 or 28).

8. The assembly according to Claim 10, wherein the central portion of the motor (30) is defined by a perimeter of the magnet (34).

9. The assembly according to Claim 10, wherein the carriage (24) comprises a first portion for carrying a payload and a second portion mounting the coil (32), the second portion of the carriage (24) mounting the coil (32) positioned inside the central portion of the motor (30).

10. The assembly according to Claim 10, wherein at least part of the carriage (24) disposed within the central portion of the motor (30) forms an electrically conductive loop.
